# EUROPEAN PATENT SPECIFICATION

(11) **EP 2 662 346 B1**
(45) Date of publication and mention of the grant of the patent: **04.07.2018**
(21) Application number: 13166630.7
(22) Date of filing: 06.05.2013
(51) Int. Cl.: C04B 20/10, C04B 28/02, C04B 111/10

(54) **Portland cement additives consisting of a reducing agent embedded in a polymer matrix**
Portlandzementzusatzmittel enthaltend in eine Polymermatrix eingeschlossene Reduktionsmittel
Additifs pour ciment Portland consistant d'un agent reducteur dans une matrice polymérique

(30) Priority: 07.05.2012 IT MI20120764
(43) Date of publication of application: 13.11.2013
(73) Proprietor: Mapei S.p.A., 20158 Milano (IT)
(72) Inventor: MAGISTRI, Matteo, 20158 MILANO (IT); RECCHI, Pietro, 20158 MILANO (IT); FORNI, Paolo, 20158 MILANO (IT)
(74) Representative: Minoja, Fabrizio

(56) References cited:
- EP-A1- 1 923 370
- EP-A1- 1 992 595
- JP-A- 2001 348 257

## Description

This invention relates to a method for reducing hexavalent chromium released into water from common cements and cement based materials. This method consists in the use of an additive composed of a suitable reducing agent embedded in a polymer matrix, the latter having suitable chemical and mechanical properties. The additive can be directly added to cement during its manufacturing (before or during intergrinding of clinker, gypsum and any other secondary mineral additions) or after the grinding step, e.g. during cement packaging or bagging ("big bags") or directly during the use of cement for mortar or concrete preparation.

### Prior art

Cement is a hydraulic binder, i.e. a finely ground inorganic material which, when mixed with water, forms a paste which sets and hardens by means of hydration reactions. When mixed with inert materials called "aggregates" (consisting of sand, gravel or stones) and water, concrete and mortar are produced, i.e. building materials which can attain specific strength levels. Common cements (whose characteristics are described in the European Standard EN 197-1 "Composition, specifications and conformity criteria for common cements") are produced by grinding clinker and gypsum in a suitable mill, while clinker is produced by heating a mixture of silica and lime containing materials in a rotary kiln.

The raw materials for cement clinker manufacturing can contain chromium. Due to the highly oxidizing and alkaline conditions of the kiln, during clinker production chromium is partially oxidized to highly toxic hexavalent chromium. As a result, the Portland clinkers and cements obtained by clinker grinding contain soluble chromates (usually from 1 to 100 parts per million - ppm or mg/kg, while the total chromium can reach 500 ppm) that are released into water during the preparation of mortar and concrete, and may cause skin irritation (allergic contact dermatitis) to operators. This is the reason why the European Community introduced the obligation (Directive 2003/53/EC) to maintain the level of soluble chromates below 2 ppm (mg/kg). The addition of suitable reducing agents in cements is therefore a common practice in European cement industry: Cr(VI) is chemically reduced to Cr(III) that is less toxic and precipitates in the alkaline conditions commonly found during the hydration of cement, forming insoluble compounds. Several reducing agents are described for this purpose: see for example WO 2006061127, EP 1559694, EP 1533287, WO 2005090258, US 2005072339, WO 2005076858, EP1505045, EP 960865, EP 697380, DE 10014468, FR 2858612, AU 647118, JP 2002274907, JP 11092193, CN 1299788.

The elimination of soluble hexavalent chromium is currently obtained with the use of iron(II) sulphate, tin(II) sulphate, tin(II) chloride or antimony trioxide (either in powder or in form of liquid additive) added during cement grinding or storage. Many of the reducing agents described in the prior art, regardless of their efficacy in eliminating soluble hexavalent chromium, present some risks for human health, as described in specific publications [see for example: "Sax's handbook of dangerous properties of industrial materials", Richard J. Lewis Sr., Wiley Interscience].

Antimony trioxide is a very powerful reducing agent for hexavalent chromium in cement. Its use in form of liquid additive has already been described in EP 1923370. The dispersion of antimony trioxide powder in a liquid carrier has the advantage of eliminating the release of dust, but in fact this limits the use of antimony trioxide to the cement grinding process only, since a liquid additive can not be used during cement bagging, due to difficulties in mixing small amounts of liquid with a powder material. The use of antimony trioxide powder as reducing agent for hexavalent chromium during cement bagging would be advantageous. On the other hand, antimony trioxide is considered a suspected carcinogenic by inhalation and its use in powder form is in fact not recommended.

Tin sulphate and tin chloride are strongly corrosive and can cause severe burns if they come in contact with skin of operators or, in a much worse situation, in case of contact with operators eyes. It must be emphasized that the dispersion of tin sulphate in a liquid carrier (as disclosed in EP 1533287), although reducing the potential risk of dust inhalation, actually has no influence on corrosiveness and potential burns that may be a consequence of contact of such liquid dispersions with operators skin and eyes.

Iron sulphate is harmful when inhaled. Its use during normal cement plant operations involves the handling of big amounts of powder (truck discharge, storage silos loading, unloading and maintenance operations, addition in cement mills during cement grinding) with consequent risk of inhalation and contact with eyes.

As far as we know, other reducing agents could be used, thanks to their low redox potential at alkaline pH, but their intrinsic toxicity and the negative impact that they could have if dispersed in the environment strongly restrict their use in practice. For example, arsenic trioxide (As₂O₃, formerly known as arsenious anhydride) or cobalt(II) salts could be considered, but there are strong concerns on the possibility of using them in a safe way (arsenic and cobalt are very toxic).

Powder reducing agents are commonly moved and received in bulk by truck (e.g. iron sulphate) or in bags (tin sulphate, antimony trioxide), discharged in dedicated storage silos, then transferred to the cement grinding mills. In any case, release of dust from the reducing agent is a common possibility and care must be taken in order to avoid contact with operators skin or eyes. During common operations in cement production, reducing agents need to be transferred, discharged or moved from the storing facility to cement mills through the use of screw pumps/screw conveyors or pneumatic systems, with consequent possibility of mechanical stress. The dispersion of tin or iron sulphate in a liquid carrier contributes to eliminate the dust release, but actually does not eliminate the risk because the liquid dispersion still maintains the harmful properties of the reducing agent. In case of spills or leakages of the liquid a risk for the operators still remains. Coating of the reducing agent should be a proper way to eliminate potential risk due to contact with dusts, provided that the material used for coating is able to resist to mechanical stresses without abrasion or other modifications that can lead to dust release.

In prior art documents some examples of encapsulation or coating of reducing agents have been reported, but the methods described only deal with the protection of the reducing agent from oxidation, in order to improve the stability of Fe(II) and Tin(II) towards oxidation to respectively Fe(III) and Tin(IV). As a consequence, although not clearly described, the coating materials used in order to limit the conditions (moisture and contact with oxygen) that promote oxidation of the reducing agent should have hydrophobic properties and low oxygen permeability. None of the prior art documents describes in details dedicated encapsulation methods for reducing the impact of harmfulness or toxicity of reducing agents. Neither are reported as critical features the mechanical properties of the encapsulation material (that must be able to avoid the possibility of dust release after abrasion or other mechanical stresses) and the possibility to control the particle size distribution of the final product (thus allowing a complete control of encapsulation).

US 4572739 discloses the use of iron sulphate as reducing agent for use in cement manufacturing. The possibility of coating iron sulphate particles with a material that prevents oxidation is described. However, no details of the coating material used are reported and no references are made to the possibility of either eliminating dust release from the iron sulphate coated particles or of controlling the particle size distribution.

EP 1520843 describes the use of iron sulphate together with hydrophobic substances (polymeric alcohols, siloxanes, silica gel). Target of the latter is to reduce the impact of moisture on performances of iron sulphate. The harmfulness of iron sulphate is not reduced.

WO 2005067730 discloses microencapsulation of iron sulphate by means of fatty acids. The background of this invention is related to the use of iron sulphate as food additive in powdered milk, and microencapsulation is obtained by spray drying. Again, no references are made regarding the resistance to mechanical stresses that could lead to iron sulphate dust release. The extension of this invention to the use of iron sulphate in cement manufacturing would not guarantee a safer use of this reducing agent.

In US 2005/109243 sulphate dispersions used as hexavalent chromium reducers are described. The possibility of coating or encapsulating solid iron(II) sulphate particles in polysaccharides or carbohydrates or other polymeric materials in order to improve the stability toward oxidation is mentioned. Although in the patent reducing agents such as iron or tin sulphate are recognized to have health hazards posed by the dust, no references are made to the mechanical performances that the material used for encapsulation should have in order to eliminate dust release by abrasion. In addition, no details are reported about the encapsulation method, thus concluding that there is no possibility to control the particle size distribution of the final encapsulated product, so as to exclude the presence of free iron or tin sulphate dust.

WO 2007080286 relates to a cement comprising coated particles consisting of an iron/tin/manganese sulphate core and a shell made of alginic acid. Target of the coating is the protection of iron, tin and manganese from oxidation. The coating procedure described envisages the blending of the metal sulphate with alginic acid in water solution, the addition of acid, and finally the drying, grinding and sieving of the final product to a particle size distribution lower than 100 µm. Critical and essential features of this invention are the particle size distribution (that must be lower than 200 µm, preferably lower than 100 µm) and the use of a limited amount of coating agent with respect to the metal sulphate to be encapsulated (the weight of alginic acid must not be higher than 5% of the weight of the core). Both features (particle dimensions of the final product similar to those of the metal sulphate that must be coated thereon and mass of coating agent that accounts for only a limited fraction of the core) suggest a limited possibility to completely encapsulate the potentially harmful metal sulphate. As in the other cited documents, no references are made to the mechanical properties of the final product and to the possibility that the coated component can be released in form of dust after abrasion.

All the examples reported are focused on the protection of the reducing agent from oxidation. In the description of the coating material, no references are made either to its ability to embed the reducing agent thus avoiding dust release, or to the mechanical properties needed to attain a stable encapsulation even in case of friction or abrasion or other types of mechanical stresses.

In view of the disadvantages of the reducing agents described in the prior art, there exists a need for a novel method of hexavalent chromium reduction in cements, which may be used during the manufacturing of common cements (and thus during clinker or gypsum grinding) or during bagging operations or when cements are used (during mortar or concrete preparation).

### Description of the invention

It has been found that the disadvantages of the prior art methods may be overcome by using an additive composed of a suitable reducing agent embedded in a polymer matrix through suitable technologies, particularly through extrusion. The use of this technology eliminates the environmental risks deriving from the use of potentially hazardous chemicals (such as tin and iron sulphate, antimony trioxide, arsenic oxide, cobalt salts) in fine powder form. Handling and dosage of the reducing agents are improved and, thanks to the suitable mechanical properties of the polymer, possibility of dust release due to abrasion is eliminated. The described additive is highly advantageous and represents the only way to use in powder form (with no need for dispersion in a liquid medium) all the compounds that, although very affective in reducing hexavalent chromium, present evidence of toxicity associated to the inhalation of fine powders.

The invention therefore provides a method for reducing hexavalent chromium in common cements and cement based materials comprising the addition of an appropriate reducing agent embedded in a polymer matrix having suitable characteristics of resistance to abrasion to said cements.

### Detailed description of the invention

The polymers that can be used for encapsulating the reducing agents according to the present invention are characterized by good solubility in alkaline conditions, with a controlled solubility kinetic and good mechanical properties in terms of resistance to abrasion and to mechanical stresses.

The high solubility in alkaline conditions, with a controlled solubility kinetic, is necessary in order to maximize the release speed of the reducing agent in cement mixing water, which is characterized by a highly basic pH, while the mechanical (resistance to abrasion) and thermal properties ensure the elimination of the release of dust containing the reducing agent in the working atmosphere and provide through extrusion a granulate with an accurate control of the size of the granules.

The thermal and mechanical properties of a polymer and its resistance to abrasion are often related. The temperature at which an amorphous polymer softens and becomes rubbery is usually referred to as glass transition temperature (Tg). When the Tg is substantially higher than room temperature, the polymer will be rigid under the normal use conditions. For the purposes of use for the preparation of the additives described in the present invention, polymers with Tg sufficiently higher than the room temperature will be suitably used (to prevent the release of the reducing agent due to deformations of the polymer). As temperature gradually increases above the Tg, the polymer gradually becomes less viscous and can be easily extruded. Optimal polymers for the invention have therefore a Tg of at least 60°C, preferably above 90°C. The upper limit of Tg depends on the stability of the reducing agent to high temperatures.

The resistance to mechanical stresses of the polymer used can be described in different ways. One of the most used ones is the so called "Taber test" (also described in ASTM D4060) which measures the weight decrease of a plastic specimen subjected to abrasion by a specific apparatus. The specimen is subjected to the action of abrader wheels with a 250, 500, or 1000 gram load for a specified number of revolutions. For the purposes of the use of the additive according to the invention, very good mechanical resistance is obtained if the polymer has a weight decrease below 1% after 500 cycles with a Cs-10F wheel and a 50 g load.

Examples of polymers suitable for use in the method according to the invention are: polyvinyl acetate (PVA), polyvinyl alcohol (PVOH), polyglycolic acid (PGA), polyglycolic acid/lactic acid copolymers (PGA/PLA), polyacrylic acid (PAA), maleic polyanhydride (PMA), acrylic or methacrylic acid/acrylic ester/styrene copolymers, acrylic or methacrylic acid/maleic anhydride copolymers, ethylene/maleic anhydride copolymers, polyester/maleic anhydride copolymers, ethylene oxide/polyethylene oxide copolymers. Preferred are polyvinyl acetate and ethylene glycol/propylene glycol copolymers.

One or more of the compounds presently known in common industrial practice may be used as the reducing agent, for example antimony trioxide, tin(II) sulphate, tin(II) chloride, iron(II) sulphate, arsenic trioxide (arsenious anhydride) or cobalt(II) salts. Antimony trioxide is particularly preferred, as it is very stable at high temperatures (it starts melting at 500°C) and it is available in commerce in form of very fine powder (dimensions lower than 10 µm). Hence, it is not affected if the extrusion process is carried out at high temperature and it can be blended in high amounts with the polymer (up to 98% antimony trioxide/2% polymer, expressed as weight percentage) without modifying the rheology of the molten polymer during extrusion, allowing the preparations of admixtures with a very wide range of particle sizes. Iron sulphate and tin sulphate are more sensitive to high temperatures, and the particle sizes of said reducing agents available on the market are bigger (usually in the range 50-200 µm). This leads to the necessity of using polymers with lower melting or softening temperature and to limit the additive particle size to a 200 µm minimum. By using a suitable polymer and controlling the extrusion process, all the reducing agents can practically be embedded.

Considering the reducing agent to polymer quantitative ratio, it depends - as already mentioned - on the properties of the reducing agent (particularly particle size and thermal stability) and of the desired final product. In principle, the additive can contain 5% to 98% by weight of reducing agent, more preferably 20% to 70%.

Considering the technology used for embedding the reducing agent, the most suitable one is extrusion, a widely known industrial process commonly used to create objects of a fixed cross-sectional profile [see for more details "Plastic extrusion technology handbook", Sidney Levy and James F. Carley, 2nd edition, Industrial Press, New York]. A material is pushed or drawn through a die of the desired cross-section. In a typical extrusion process for polymeric material, the polymer is heated to a low viscosity or molten state and then forced by a screw through a die, forming the polymer into the desired shape. The extrudate is then cooled and it solidifies as it is pulled through the die or immediately after, using for example a water tank.

A typical procedure for the manufacturing of the additive used in the method of the present invention consists in preparing a blend comprised of the suitable polymer (in pellets, powder or granules) and the reducing agent, heating the blend in order to have a substantial viscosity reduction or melting of the polymer, then extruding this blend into a form of strand, cooling the strand and cutting it in pellets or granules. As a results, particles of polymer that encapsulate the reducing agent are obtained. In a typical extrusion process, the blending, heating and extrusion operations are carried out in the same machinery, for example by adding (through a hopper) the reducing agent to the molten polymer before the screw. Being the extrusion a mechanical process, it is possible to accurately control the size of the granules or pellets by choosing the most appropriate diameter of the die and by properly setting the machinery for cutting the strand. This represents a clear advantage over the prior art methods, as described for example in WO 2007080286 and WO 2005067730 where the encapsulation of the reducing agent is obtained through the use of alginate or fatty acids respectively, without any control (or with a limited control) of the final dimensions of the additive.

The embedding of the reducing agent can also be attained according to technologies different from extrusion, for example by spray-drying or similar technologies.

The method of the invention can be applied to cements obtained by intergrinding of clinker, gypsum and, if needed, limestone, fly ash, pozzolan materials, rapid cooled blast furnace slag.

The additive is added to the cement during grinding, bagging or packaging.

### Description of the figures

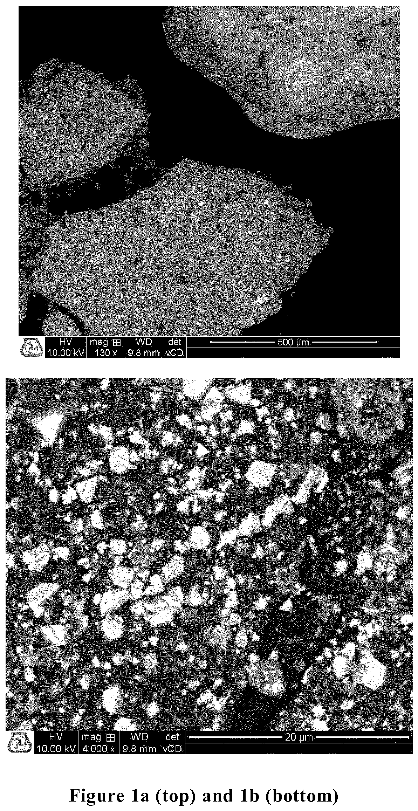

**Figures 1a and 1b** - SEM images of a typical additive according to the invention (60% antimony trioxide extruded with 40% polyvinyl acetate).
**Figure 1a****:** the additive is composed of grains of size above 500 µm.
**Figure 1b****:** details of the additive particles showing the antimony trioxide powder (size below 10 µm) embedded in the polymer matrix.
**Figures 2a and 2b** - Particle size distributions (obtained by laser diffraction) of pure antimony trioxide (1a) and a typical additive used in the method according to the invention (60% antimony trioxide extruded with 40% of ethylene glycol/propylene glycol copolymer). In 1b no grains below 10 µm diameter are observed.
**Figure 3** - Release of antimony from the additive in the alkaline solution.
**Figure 4** - Reducing efficacy of the additives.

Particularly, in figures 1a and 1b SEM (Scanning Electron Microscope) images of an additive used in the method according to the present invention (60% antimony trioxide extruded with 40% polyvinyl acetate) are reported. The images show the typical morphology of the additive: it is composed of grains (size from 500 to 1000 µm) which embed the very fine antimony trioxide particles. In particular, figure 1b (higher magnification) shows antimony trioxide particles (white colored, size below 10 µm) dispersed in the polymer (dark colored).

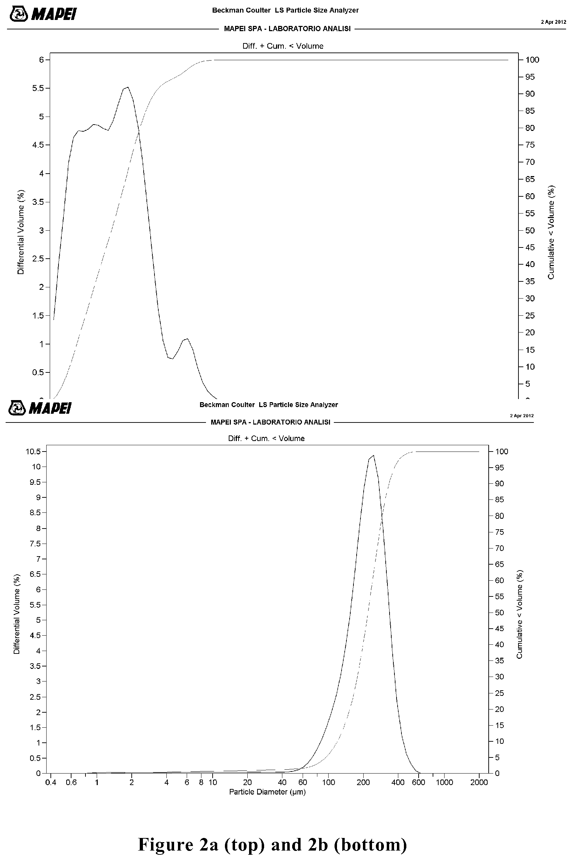

Particle size distribution is a graph reporting the relative amounts of particles present in a granular or powder material, sorted according to size. In figures 2a and 2b particle size distributions of pure antimony trioxide and an additive containing antimony trioxide are reported. The reducing agent is a very fine dust (all the grains have size lower than 10 µm), but particle size distribution of the additive shows that fractions below 10 µm can be strongly reduced or eliminated (in figure 2b no particles below 10 µm are present). This possibility of particle size control can only be attained using an extrusion process and a polymer suitable with chemical and physical characteristics. None of the known technical solutions allows this strict control of particle dimensions. In addition, no appreciable variation of particle size distribution appears after mechanical stress on the additive, thus preventing the release of particles of size comparable to those of the free reducing agent.

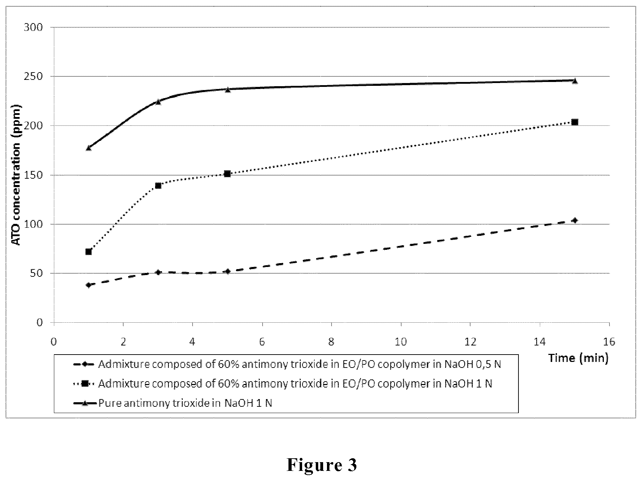

When the additive used in the method of the present invention comes in contact with a strongly alkaline environment (as it happens in cement mixing water), the polymer dissolves and the reducing agent is released, thus being available for reduction of hexavalent chromium. This can be demonstrated by dispersing the additive in an alkaline aqueous solution (for example a water solution of sodium hydroxide at different concentrations) and, at fixed intervals, sampling the water solution and analyzing the reducing agent concentration that has passed in solution. Figure 3 reports a diagram showing the amounts of antimony in solution as a function of time (evaluated using Inductively Coupled Plasma/Atomic Emission Spectroscopy, or specific colorimetric methods). As the pH increases (passing from 0.5 N to 1 N NaOH) the dissolution kinetic of antimony trioxide contained in the additive (in this case composed of 60% antimony trioxide extruded with 40% ethylene glycol/propylene glycol copolymer) approaches the dissolution kinetic of pure antimony trioxide, thus demonstrating the possibility of effecting a controlled release of the reducing agent.

The invention is described in greater detail in the following examples.

### Example 1

A typical additive used in the method of the invention is manufactured in the following way: a blend of 80% antimony trioxide and 20% ethylene oxide/propylene oxide copolymer is prepared and extruded at a temperature ranging from 100 to 150°C in the form of strands, which are then cooled and cut in order to obtain granules with diameters ranging from 500 to 1000 µm.

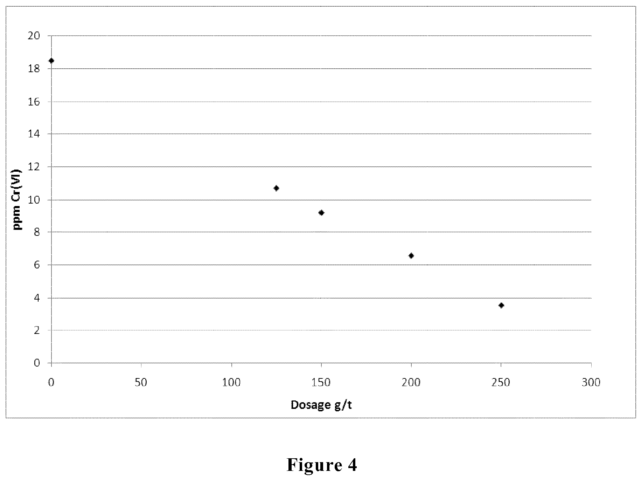

By means of a suitable powder mixer, the additive is then uniformly added to a common cement (CEM I 52,5 R according to European Standard EN 197-1 "Composition, specifications and conformity criteria for common cements") so as to prepare a number of cement samples, each one with a different additive dosage. The soluble hexavalent chromium released into water by each cement sample is then analyzed by using the reference test as described in European Standard EN 196-10 "Analysis of cements - Determination of the water-soluble chromium (VI) content of cement" (preparation of a standard mortar by mixing cement, sand and water; filtration of the mortar in order to extract the water; analysis of the hexavalent chromium content in water by means of a colorimetric method based on the use of diphenylcarbazide reactive). The results are summarized in the following table 1 and graphically represented in figure 4. According to the results obtained, the antimony trioxide maintains its efficacy as reducing agent even while embedded in the polymer matrix.

**Table 1: effect of the additive prepared as described in example 1 on the Cr(VI) content of cement.**

| | | | | | | |
|---|---|---|---|---|---|---|
| Dosage of additive prepared as described in example 1 (expressed as mg/kg of cement) | - | 125 | 150 | 200 | 250 | 300 |
| Hexavalent chromium according to EN 196-10 (expressed as mg/kg of cement) | 18.5 | 10.7 | 9.22 | 6.58 | 3.55 | 0.0 |

### Example 2

A blend consisting of (weight percentages) 70% iron sulphate and 30% polyvinyl acetate (commercially available as Vinavil K40) is prepared and extruded at temperature lower than 90°C in order to avoid partial oxidation of iron sulphate. The extruded strands are then cooled and cut in order to obtain granules with diameters ranging from 1000 to 2000 µm.

The thus prepared additive is then ground in lab mill with a cement composition corresponding to a CEM I according to EN 197-1 (95% clinker, 5% gypsum). Using the same clinker and gypsum, several cement samples with same composition but different content of the additive are prepared.

The soluble hexavalent chromium released from each cement sample is then analyzed by using the reference test as described in example 1 (according to EN 196-1. The results are summarized in the following table 2. According to the results obtained, the iron sulphate maintains its efficacy as reducing agent while embedded in the polymer matrix.

**Table 2: effect of the additive prepared as described in example 2 on the Cr(VI) content of cement.**

| | | | |
|---|---|---|---|
| Dosage of additive prepared as described in example 2 (expressed as mg/kg of cement) | - | 200 | 400 |
| Hexavalent chromium according to EN 196-10 (expressed as mg/kg of cement) | 12.3 | 6.1 | 0.0 |

## Claims

1. A method for reducing hexavalent chromium in common cements and cement based materials comprising the addition, to said cements, of a suitable reducing agent embedded in a polymer matrix selected from a group consisting of polyvinyl acetate (PVA), polyvinyl alcohol (PVOH), polyglycolic acid (PGA), polyglycolic acid/lactic acid copolymers (PGA/PLA), polyacrylic acid (PAA), maleic polyanhydride (PMA), acrylic or methacrylic acid/acrylic ester/styrene copolymers, acrylic or methacrylic acid/maleic anhydride copolymers, ethylene/maleic anhydride copolymers, polyester/maleic anhydride copolymers, ethylene oxide/polyethylene oxide copolymers.

2. A method according to claim 1 wherein the cement is a material obtained by intergrinding of clinker, gypsum and, optionally limestone, fly ash, pozzolan materials, rapid cooled blast furnace slag.

3. A method according to claim 1 or 2 wherein said reducing agent is selected from antimony trioxide, tin(II) sulphate, tin(II) chloride, iron(II) sulphate, arsenic trioxide (arsenious anhydride), cobalt(II) salts.

4. A method according to one or more of claims 1-3 wherein the polymer matrix consists of an ethylene glycol/propylene glycol copolymer.

5. A method according to one or more of claims 1-4 wherein the polymer matrix consists of polyvinyl acetate.

6. A method according to claims 1-4 wherein the amount of reducing agent in the additive ranges from 5% to 98% by weight, more preferably from 20% to 70%.

7. A method according to claims 1-6, wherein embedding of the reducing agent is obtained by extrusion or spray drying.

8. A method according to claim 1 wherein the additive is added to cement during grinding, bagging or packaging.

## Patentansprüche

1. Verfahren zum Reduzieren von sechswertigem Chrom in üblichen Zementen und zementbasierten Materialen, umfassend die Zugabe zu diesen Zementen eines geeigneten Reduktionsmittels, eingebettet in eine Polymermatrix, ausgewählt aus einer Gruppe, bestehend aus Polyvinylacetat (PVA), Polyvinylalkohol (PVOH), Polyglycolsäure (PGA), Polyglycolsäure/Milchsäure-Copolymeren (PGA/PLA), Polyacrylsäure (PAA), Maleinsäurepolyanhydrid (PMA), Acryl- oder Methacrylsäure/Acrylester/Styrol-Copolymeren, Acryl- oder Methacrylsäure/Maleinsäureanhydrid-Copolymeren, Ethylen/Maleinsäureanhydrid-Copolymeren, Polyester/Maleinsäureanhydrid-Copolymeren, Ethylenoxid/Polyethylenoxid-Copolymeren.

2. Verfahren gemäß Anspruch 1, wobei der Zement ein Material ist, welches durch Vermahlen von Klinker, Gips und gegebenenfalls Kalk, Flugasche, Puzzolanmaterialien, schnell abgekühltem Hochofengas erhalten wurde.

3. Verfahren gemäß Anspruch 1 oder 2, wobei das Reduktionsmittel aus Antimontrioxid, Zinn(II)-Sulfat, Zinn(II)-Chlorid, Eisen(II)-Sulfat, Arsentrioxid (Anhydrid der arsenigen Säure), Kobalt(II)-Salzen ausgewählt ist.

4. Verfahren gemäß einem oder mehreren der Ansprüche 1 bis 3, wobei die Polymermatrix aus einem Ethylenglycol/Propylenglycol-Copolymer besteht.

5. Verfahren gemäß einem oder mehreren der Ansprüche 1 bis 4, wobei die Polymermatrix aus Polyvinylacetat besteht.

6. Verfahren gemäß den Ansprüchen 1 bis 4, wobei die Menge des Reduktionsmittels in dem Additiv von 5 Gew.-% bis 98 Gew.-%, mehr bevorzugt von 20% bis 70%, reicht.

7. Verfahren gemäß den Ansprüchen 1 bis 6, wobei das Einbetten des Reduktionsmittels durch Extrusion oder Sprühtrocknen erreicht wird.

8. Verfahren gemäß Anspruch 1, wobei das Additiv während dem Mahlen, Abfüllen oder Verpacken zu dem Zement gegeben wird.

## Revendications

1. Procédé pour la réduction du chrome hexavalent dans des ciments courants et dans des matières à base de ciment, comprenant l'addition auxdits ciments d'un agent de réduction approprié incorporé dans une matrice polymère choisie parmi un groupe constitué par le polyacétate de vinyle (PVA), l'alcool polyvinylique (PVOH), l'acide polyglycolique (PGA), des copolymères d'acide polyglycolique/acide lactique (PGA/PLA), l'acide polyacrylique (PAA), le polyanhydride maléique (PMA), des copolymères d'acide acrylique ou méthacrylique/ester acrylique/styrène, des copolymères d'acide acrylique ou méthacrylique/anhydride maléique, des copolymères d'éthylène/anhydride maléique, des copolymères de polyester/anhydride maléique, des copolymères d'oxyde d'éthylène/oxyde de polyéthylène.

2. Procédé selon la revendication 1, dans lequel le ciment est une matière que l'on obtient par mouture de clinker, de gypse et, de manière facultative, de calcaire, de cendres volantes, de matières pouzzolaniques, de laitier de haut-fourneau rapidement refroidi.

3. Procédé selon la revendication 1 ou 2, dans lequel ledit agent de réduction est choisi parmi le trioxyde d'antimoine, le sulfate d'étain(II), le chlorure d'étain(II), le sulfate de fer(II), le trioxyde d'arsenic (anhydride arsénieux), des sels de cobalt(II).

4. Procédé selon une ou plusieurs des revendications 1 à 3, dans lequel la matrice polymère est constituée d'un copolymère d'éthylène glycol/propylène glycol.

5. Procédé selon une ou plusieurs des revendications 1 à 4, dans lequel la matrice polymère est constituée de polyacétate de vinyle.

6. Procédé selon les revendications 1 à 4, dans lequel la quantité de l'agent de réduction dans l'additif se situe dans la plage de 5 % à 98 % en poids, de manière plus préférée de 20 % à 70 %.

7. Procédé selon les revendications 1 à 6, dans lequel l'incorporation de l'agent de réduction a lieu par extrusion ou par séchage par pulvérisation.

8. Procédé selon la revendication 1, dans lequel l'additif est ajouté au ciment lors du broyage, de l'ensachage ou du conditionnement.
